# EUROPÄISCHE PATENTSCHRIFT

(11) **EP 0 652 137 B1**
(45) Veröffentlichungstag und Bekanntmachung des Hinweises auf die Patenterteilung: **21.05.1997**
(21) Anmeldenummer: 94116694.4
(22) Anmeldetag: 22.10.1994
(51) Int. Cl.: B60R 16/02, B60H 1/00

(54) **Schaltungsanordnung zur Stromversorgung eines Gebläses und/oder Akkumulators mittels Solargenerator in einem Fahrzeug**
Power supply for ventilator and/or an accumulator using a solargenerator in a vehicle
Circuit d'alimentation en courant d'un ventilateur ou/et d'un accumulateur au moyen d'un générateur solaire dans une voiture

(30) Priorität: 23.10.1993 DE 4336223
(43) Veröffentlichungstag der Anmeldung: 10.05.1995
(73) Patentinhaber: WEBASTO KAROSSERIESYSTEME GmbH, D-82131 Stockdorf (DE)
(72) Erfinder: Ganz, Thomas, D-82131 Stockdorf (DE); Watzlawick, Robert, D-81477 München (DE)
(74) Vertreter: Wiese, Gerhard

(56) Entgegenhaltungen:
- DE-A- 3 540 353
- DE-A- 3 604 226
- DE-A- 3 924 755
- DE-A- 4 139 435

## Beschreibung

Die Erfindung betrifft eine Schaltungsanordnung zur Stromversorgung eines Gebläses und/oder Akkumulators mittels Solargenerator in einem Fahrzeug, mit einem der Impedanzanpassung zwischen dem Solargenerator und dem Gebläse bzw. dem Akkumulator dienenden Gleichspannungswandler, der einen Schalter aufweist, der mittels eines pulsbreitenmodulierten Stellsignals wechselweise geöffnet und geschlossen wird.

Schaltungsanordnungen dieser Art sind aus der Zeitschrift "Sonnenenergie" 1/88, Seiten 9 bis 11 und DE 40 17 670 A bekannt. Der Gleichspannungswandler sorgt dabei durch die Impedanzanpassung für eine Leistungsanpassung des Verbrauchers an den Solargenerator. Durch geeignete Pulsbreitenmodulation des Stellsignals soll ein sogenanntes MPP-Tracking (Maximum-Power-Point Tracking) in Abhängigkeit von einer Leistungsmessung erreicht werden, die in der Regel an der Eingangsseite des Gleichspannungswandlers erfolgt.

Die bekannten Schaltungsanordnungen bedingen beim Einsatz in Fahrzeugen einen erheblichen Zusatzaufwand. Der Erfindung liegt die Aufgabe zugrunde, diesen Aufwand besonders niedrig zu halten.

Ausgehend von einer Schaltungsanordnung der eingangs genannten Art wird diese Aufgabe erfindungsgemäß dadurch gelöst, daß zur Erzeugung des pulsbreitenmodulierten Stellsignals ein Mikroprozessor, ein Frequenzgenerator und ein mit dem Ausgangssignal des Frequenzgenerators und einem Steuersignal des Mikroprozessors beaufschlagter Pulsbreitenmodulator vorgesehen sind, die in Abhängigkeit von einem Umschaltsignal wahlweise auch als Komponenten einer Betätigungseinrichtung zum Verstellen eines verstellbaren Teiles, insbesondere eines Deckels, eines Sonnendaches, wie eines Solardaches, Schiebehebe-daches, Hebedaches oder Spoilerdaches nutzbar sind.

Bei der erfindungsgemäßen Anordnung lassen sich so wesentliche Teile der Solarstromversorgung mehrfach nutzen, so daß der Aufwand für die Solarstromversorgung bei mit einem elektrisch verstellbaren Sonnendach versehenen Fahrzeugen verringert wird.

In weiterer Ausgestaltung der Erfindung ist dem Pulsbreitenmodulator eine Endstufe nachgeschaltet, die gleichfalls wahlweise zur Ansteuerung des Gleichspannungswandlers oder der Sonnendach-Betätigungseinrichtung nutzbar ist.

Des weiteren ist zweckmäßig ein Strommeßglied zum Anliefern eines Strommeßsignals an den Mikroprozessor in Abhängigkeit von dem in der Endstufe fließenden Strom bei Nutzung der Endstufe sowohl zur Ansteuerung des Gleichspannungswandlers als auch der Sonnendach-Betätigungseinrichtung vorgesehen. Beim Betrieb des Gleichspannungswandlers kann das Strommeßsignal zur Strombegrenzung und zur Kurzschlußsicherung verwendet werden. Beim Betrieb der Sonnendach-Betätigungseinrichtung kann dagegen mittels des Strommeßsignals die Stromaufnahme der Betätigungseinrichtung bestimmt werden, um ein Klemmen des verstellbaren Sonnendach-Teiles und/oder Motordefekte zu erkennen.

Vorzugsweise ist die Auslegung der Schaltungsanordnung so getroffen, daß beim Einsatz des Pulsbreitenmodulators zum Ansteuern des Schalters des Gleichspannungs wandlers an dem Mikroprozessor ein Spannungssignal anliegt, das ein Maß für die Ausgangsspannung des Gleichspannungswandlers ist, und daß der Mikroprozessor so ausgelegt und/oder programmiert ist, daß er die Gleichspannungswandler-Ausgangsspannung durch Ändern des dem Pulsbreitenmodulator zugehenden Steuersignals zu maximieren sucht. Dabei erfolgt eine MPP-Regelung nicht über eine die Ermittlung von Strom und Spannung bedingende Leistungsmessung an der Eingangsseite des Gleichspannungswandlers, sondern einfach in Abhängigkeit von einer Spannungsmessung an der Ausgangsseite des Gleichspannungswandlers. Dadurch wird der Bauelementeaufwand besonders klein gehalten.

Zwischen den Ausgang des Gleichspannungswandlers und den das Spannungsmeßsignal aufnehmenden Eingang des Mikroprozessors kann zweckmäßig eine beispielsweise als Tiefpaß ausgelegte Filterstufe zur Dämpfung oder Unterdrückung von dem Spannungssignal überlagerten Störsignalen geschaltet sein.

Für eine Temperaturkompensation der Ladeendspannung des Akkumulators kann vorteilhaft ein Temperatursensor vorgesehen sein, der an den Mikroprozessor ein Temperaturmeßsignal zum Beeinflussen des dem Pulsbreitenmodulator zugehenden Steuersignals in Abhängigkeit von der Umgebungstemperatur bzw. der Batterietemperatur anlegt.

Die Sornendach-Betätigungseinrichtung ist vorzugsweise in an sich bekannter Weise (DE 33 24 107 C) als Vorwahlautomatik ausgelegt, die einen Sollwertgeber mit einem Wählglied für die Stellung des verstellbaren Sonnendach-Teils und einen dem verstellbaren Sonnendach-Teil zugeordneten Antrieb aufweist, der Teil eines Regelkreises ist, der die am Wählglied eingestellte Stellung mit der Ist-Stellung des verstellbaren Sonnendach-Teils vergleicht und letzteres verstellt, bis die Regelabweichung zu Null geworden ist.

Ein bevorzugtes Ausführungsbeispiel der Erfindung ist nachstehend anhand der beiliegenden Zeichnungen näher erläutert. Dabei zeigt:
- Fig. 1: schematisch ein Blockschaltbild der Schaltungsanordnung zur Solarstromversorgung und zur Sonnendach-Betätigung und
- Fig. 2: ein Blockschaltbild einer als Vorwahlautomatik ausgebildeten Sonnendach-Betätigungseirrichtung.

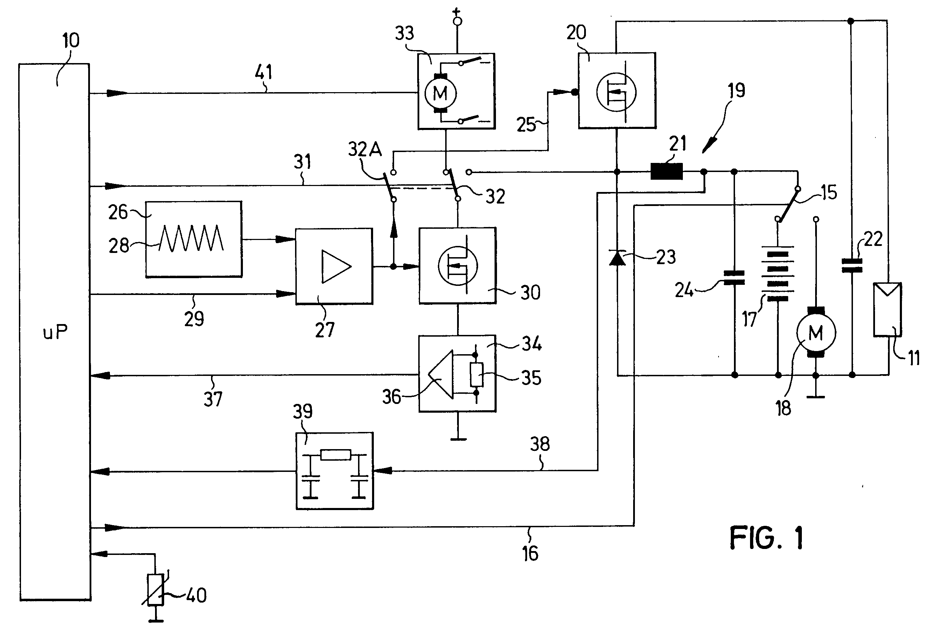

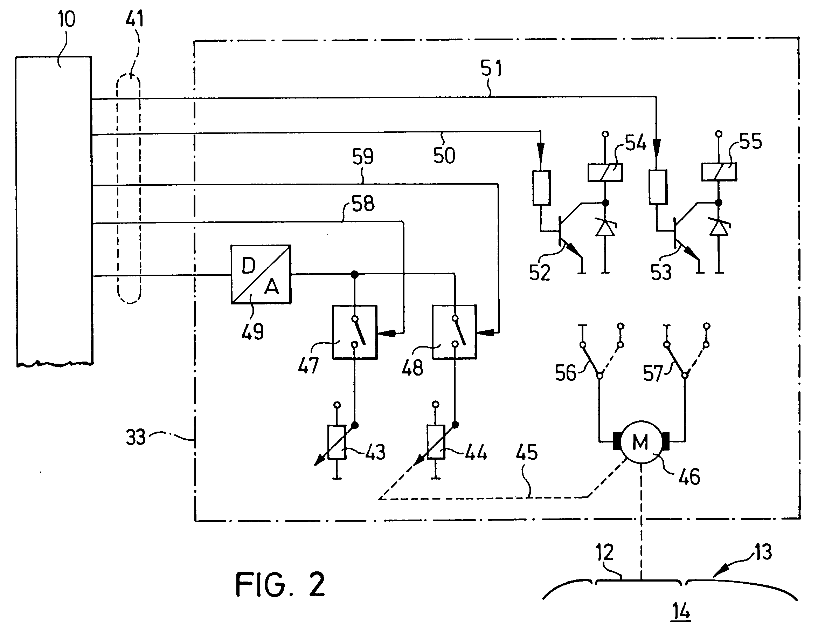

Die Schaltungsanordnung gemäß den Fign. 1 und 2 weist einen Mikroprozessor 10 auf, der gegebenenfalls Teil eines für das Fahrzeug ohnehin installierten Bordcomputers sein kann. Mit 11 ist ein Solargenerator bezeichnet. Der Solargenerator 11 kann beispielsweise in einen Deckel 12 (Fig. 2) eines Sonnendaches 13 eines Kraftfahrzeugs 14 integriert sein. Solche Solargeneratoren sind in unterschiedlichen Ausführungsformen bekannt (z.B. DE 41 05 389 C und DE 41 05 396 A) und bedürfen daher keiner näheren Erläuterung. In Abhängigkeit von der Stellung eines Umschalters 15, der manuell oder vom Mikroprozessor 10 über eine Befehlsleitung 16 gesteuert wird, wird die von dem Solargenerator 11 abgegebene elektrische Energie benutzt, um entweder einen an Bord des Fahrzeuges 14 befindlichen Akkumulator 17 aufzuladen oder ein Gebläse 18 zu betätigen. Bei dem Akkumulator 17 kann es sich um die normale Kraftfahrzeugbatterie oder um einen zusätzlichen Energiespeicher handeln. Das Gebläse 18 kann in bekannter Weise ein Serienfahrzeuglüfter sein (vergleiche beispielsweise DE 40 17 670 A). Das Gebläse 18 kann aber beispielsweise auch aus einem oder mehreren Zusatzgebläsen bestehen, die im Dachbereich oder an anderer Stelle im Fahrzeug angeordnet sind. Beispielsweise ist es auch möglich, in Abhängigkeit von der gemessenen Lichtintensität einen oder mehrere Lüfter zuzuschalten. Lösungen dieser Art sind gleichfalls in unterschiedlichen Ausführungsformen bekannt (DE 40 22 928 A, DE 40 09 871 A, DE 39 38 259 C). Zwischen den Solargenerator 11 und den Akkumulator 17 sowie das Gebläse 18 ist ein in Fig. 1 insgesamt mit 19 bezeichneter Gleichspannungswandler geschaltet. Dieser Gleichspannungswandler ist in der veranschaulichten Ausführungsform als Abwärtswandler oder Tiefsetzer ausgebildet und umfaßt in dieser Ausführungsform einen Schalter 20 und eine Spule 21, die in Reihe zwischen dem Solargenerator 11 und dem Umschalter 15 liegen. Zu dem Gleichspannungswandler 19 gehören ferner ein parallel zu dem Solargenerator 11 geschalteter eingangsseitiger Kondensator 22 sowie ausgangsseitig eine Schaltung aus einer Diode 23 und einem Kondensator 24. Diese Schaltung liegt ihrerseits parallel zu der Reihenschaltung aus Umschalter 15 und Akkumulator 17 bzw. Gebläse 18. Der Schalter 20 wird im Interesse möglichst geringer Durchlaßverluste vorteilhaft in an sich bekannter Weise (Sonnenergie 1/88, Seiten 9 bis 11) von einem MOS-FET-Leistungstransistor mit zugehöriger Treiberschaltung gebildet. In Abhängigkeit von der vom Solargenerator 11 abgegebenen Spannung, der erforderlichen Ladespannung des Akkumulators 17 und der Betriebsspannung des Gebläses 18 kann der Gleichspannungswandler gegebenenfalls auch als Aufwärtswandler (Hochsetzer) oder als Invers-Wandler ausgelegt sein. Diese verschiedenen Arten von Gleichspannungswandlern sind gleichfalls an sich bekannt (Sonnenergie 1/88, Seiten 9 bis 11) und bedürfen daher vorliegend keiner näheren Erörterung.

Der Schalter 20 wird mittels eines ihm über eine Leitung 25 zugehenden pulsbreitenmodulierten Stellsignals wechselweise geöffnet und geschlossen. Zur Erzeugung des pulsbreitenmodulierten Stellsignals sind ein Frequenzgenerator 26 und ein Pulsbreitenmodular 27 vorgesehen. Der Frequenzgenerator 26 erzeugt im veranschaulichten Ausführungsbeispiel ein festfrequentes Dreiecksignal 28, dessen Frequenz vorzugsweise über der Hörgrenze, beispielsweise bei 20 kHz, liegt, um die Erzeugung unerwünschter Störgeräusche zu vermeiden. Der Pulsbreitenmodulator 27 kann einfach als Komparator ausgelegt sein, der das Ausgangssignal des Frequenzgenerators 26 mit einer vom Mikroprozessor 10 über eine Leitung 29 angelieferten pulsbreitenbestimmenden Spannung vergleicht. Am Ausgang des Pulsbreitenmodulators 27 erscheint das pulsbreitenmodulierte Stellsignal, das einer Endstufe 30 unmittelbar sowie dem Schalter 20 (wie mittels des Punktes am Eingang des Schalters 20 angedeutet) invertiert zugeht. Die Endstufe 30 weist, wie in Fig. 1 angedeutet, vorzugsweise gleichfalls einen oder mehrere MOS-FET-Leistungstransistoren auf. Diese Endstufe 30 dient in der Betriebsart als Gleichspannungswandler (Schalter 32 rechts liegend) zur Minimierung von Durchlaßverlusten der Diode 23 in deren leitendem Zustand. Der Ausgang der Endstufe 30 wird mittels eines vom Mikroprozessor 10 über eine Steuerleitung 31 kontrollierten Umschalters 32, 32A entweder mit einer Sonnendach-Betätigungseinrichtung 33 oder dem Gleichspannungswandler 19 verbunden. Der Umschalter 32 wird vorzugsweise als Schaltrelais ausgeführt, wohingegen der Schalter 32A von einem Logikgatter gebildet wird. Im Ausgangskreis der Endstufe 30 liegt ein Strommeßglied 34, das zweckmäßig einen Strommeßwiderstand 35 und eine Verstärkerstufe 36 aufweist und das über eine Leitung 37 ein Strommeßsignal an den Mikroprozessor 10 gibt.

Ein für die Ausgangsspannung des Gleichspannungswandlers 19 kennzeichnendes Signal geht über eine Leitung 38 und eine Filterstufe 39 an den Mikroprozessor 10. Bei der Filterstufe 39 kann es sich, wie in Fig. 1 angedeutet, insbesondere um einen Tiefpaß handeln. Aufgabe der Filterstufe 39 ist es, dem Spannungsmeßsignal überlagerte Störsignale zu dämpfen oder zu unterdrücken. Die Filterstufe 39 kann alternativ auch durch eine Softwarelösung im Mikroprozessor 10 realisiert werden. An einen weiteren Eingang des Mikroprozessors 10 ist ein Temperatursensor 40 angeschlossen. Die Sonnendach-Betätigungseinrichtung 33 wird von dem Mikroprozessor 10 angesteuert und empfängt von diesem Signale. Dies ist in Fig. 1 schematisch durch das Kabel 41 angedeutet.

Die Sonnendach-Betätigungseinrichtung 33 kann grundsätzlich in beliebiger bekannter Weise aufgebaut sein. Beispiele dafür ergeben sich aus der DE 29 02 683 A und der EP 0 004 970 B. Vorzugsweise handelt es sich jedoch bei der Sonnendach-Betätigungseinrichtung 33 um eine Vorwahlautomatik, wie sie an sich aus der DE 33 24 107 C bekannt ist. Wesentliche Teile einer solchen Vorwahlautomatik sind schematisch in Fig. 2 wiedergegeben. Zu ihnen gehören ein beispielsweise als Potentiometer ausgebildeter Sollwertgeber 43 für die Soll-Stellung des Deckels 12 und ein die Ist-Stellung des Deckels 12 erfassender Istwertgeber 44, bei dem es sich gleichfalls um ein Potentiometer handeln kann. Eine mechanische Verbindung zwischen dem Istwertgeber 44 und dem Deckel 12 bzw. einem dem Verstellen des Deckels dienenden Antriebsmotor 46 ist in Fig. 2 bei 45 angedeutet. Die von den Potentiometern 43 und 44 kommenden Soll- und Ist-Stellungssignale werden im dargestellten Ausführugsbeispiel digital ausgewertet. Für diesen Zweck sind die Ausgange der Potentiometer 43 und 44 über elektronische Schalter 47 und 48 im Zeitmultiplexbetrieb an einen A/D-Wandler 49 anschaltbar, der die analogen Stellungssignale in digitale Signale umwandelt. Mit diesen digitalen Stellungssignalen wird der Mikroprozessor 10 beaufschlagt. Der Mikroprozessor 10 führt einen Vergleich von Soll- und Ist-Stellung durch, und er gibt bei entsprechenden Regelabweichungen Stellsignale über Steuerleitungen 50 bzw. 51 an Leistungstransistoren 52 bzw. 53. Im Kollektor-Emitterkreis der Leistungstransistoren 52, 53 liegt jeweils ein Relais 54 bzw. 55 mit zugehörigen Relaiskontakten 56 bzw. 57. Über die Relaiskontakte 56 und 57 wird der Antriebsmotor 46 so an Spannung gelegt, daß er sich bedarfsweise in der einen oder der anderen Richtung dreht. Die Ansteuerung der Schalter 47 und 48 erfolgt vom Mikroprozessor 10 über Steuerleitungen 58 und 59.

Ist im Betrieb vom Mikroprozessor 10 über die Steuerleitung 31 und den Umschalter 32 der Gleichspannungswandler 19 wirksam gemacht, wird die vom Solargenerator 11 gelieferte Energie in Abhängigkeit von der Stellung des Umschalters 15 genutzt, um den Akkumulator 17 nachzuladen oder das Gebläse 18 anzutreiben. Dabei wird die Abhängigkeit von Eingangs- zu Ausgangsspannung des Gleichspannungswandlers 19 durch das Tastverhältnis des pulsbreitenmodulierten Stellsignals am Ausgang des Pulsbreitenmodulators 27 bestimmt. Ist der Schalter 20 leitend, baut sich in der Spule 21 ein Magnetfeld auf. Wird der Schalter 20 wieder nichtleitend, versucht die Spule 21 den momentanen Strom durch die Diode 23 weiter zu treiben. Wegen der Reihenschaltung von Spule 21 und Verbraucher (Akkumulator 17 oder Gebläse 18) ist die Ausgangsspannung des Gleichspannungswandlers 19 geringer als seine Eingangsspannung. In dem Kondensator 22 wird die während der Nichtleitendphase des Schalters 20 anfallende Eingangsenergie zwischengespeichert. Der Kondensator 24 sorgt für eine Glättung der Ausgangsspannung. Das Tastverhältnis des über die Leitung 25 laufenden Stellsignals wird vom Mikroprozessor 10 in Abhängigkeit von dem über die Leitung 38 laufenden Spannungsmeßsignal so eingestellt, daß am Ausgang des Gleichspannungswandlers 19 immer die maximal erreichbare Spannung erzeugt wird. Dies gilt sowohl für den Betrieb des Gebläses 18 als auch für das Nachladen des Akkumulators 17 bis zu seiner Lade-endspannung.

Statt des über die Leitung 29 gehenden Steuersignals in Form einer Gleichspannung mit änderbarer Amplitude kann der Mikroprozessor 10 auch selbst eine pulsbreitenmodulierte Spannung erzeugen, die mittels eines Tiefpasses zu einer pulsbreitenproportionalen Gleichspannung gewandelt wird.

Wird über den Umschalter 32 die Betätigungseinrichtung 33 angesteuert und ist letztere entsprechend Fig. 2 als Vorwahlautomatik ausgelegt, kann der Fahrer am Sollwertgeber 43 eine gewünschte Stellung des Deckels 12 einstellen. Mittels des Antriebsmotors 46 wird dann der Deckel 12 so lange selbsttätig verstellt, bis Übereinstimmung zwischen der Soll-Stellung und der vom Istwertgeber 44 erfaßten Ist-Stellung ermittelt wird. Bei Betrieb des Antriebsmotors 46 wird über das Strommeßglied 34 der Laufstrom gemessen. Auf diese Weise können ein Klemmen des Daches, das Einklemmen eines Gegenstandes oder Motordefekte erkannt werden. Beim Betrieb des Gleichspannungswandlers 19 dient das von dem Strommeßglied 34 angelieferte Signal der Strombegrenzung und der Kurzschlaßsicherung.

Über den Temperatursensor 40 kann die Ladeendspannung des Akkumulators 17 der jeweils herrschenden Umgebungstemperatur bzw. der Akkumulatortemperatur angepaßt werden.

### Bezugszeichenliste

- 10: Mikroprozessor
- 11: Solargenerator
- 12: Deckel
- 13: Sonnendach
- 14: Fahrzeug
- 15: Umschalter
- 16: Befehlsleitung
- 17: Akkumulator
- 18: Gebläse
- 19: Gleichspannungswandler
- 20: Schalter
- 21: Spule
- 22: eingangsseitiger Kondensator
- 23: Diode
- 24: Kondensator
- 25: Leitung
- 26: Frequenzgenerator
- 27: Pulsbreitenmodulator
- 28: Dreiecksignal
- 29: Leitung
- 30: Endstufe
- 31: Steuerleitung
- 32: Umschalter
- 33: Sonnendach-Betätigungs-Einrichtung
- 34: Strommeßglied
- 35: Strommeßwiderstand
- 36: Verstärkerstufe
- 37: Leitung
- 38: Leitung
- 39: Filterstufe
- 40: Temperatursensor
- 41: Kabel
- 43: Sollwertgeber
- 44: Istwertgeber
- 45: mechan. Verbindung
- 46: Antriebsmotor
- 47,48: elektron. Schalter
- 49: A/D-Wandler
- 50: Steuerleitung
- 51: Steuerleitung
- 52,53: Leistungstransistor
- 54,55: Relais
- 56,57: Relaiskontakte
- 58,59: Steuerleitung

## Patentansprüche

1. Schaltungsanordnung zur Stromversorgung eines Gebläses (18) und/oder Akkumulators (17) mittels Solargenerator (11) in einem Fahrzeug (14), mit einem der Impedanzanpassung zwischen dem Solargenerator und dem Gebläse bzw. dem Akkumulator dienenden Gleichspannungwandler (19), der einen Schalter (20) aufweist, der mittels eines pulsbreitenmodulierten Stellsignals wechselweise geöffnet und geschlossen wird, **dadurch gekennzeichnet**, daß zur Erzeugung des pulsbreitenmodulierten Stellsignals ein Mikroprozessor (10), ein Frequenzgenerator (26) und ein mit dem Ausgangssignal des Frequenzgenerators und einem Steuersignal des Mikroprozessors beaufschlagter Pulsbreitenmodulator (27) vorgesehen sind, die in Abhängigkeit von einem Umschaltsignal wahlweise auch als Komponenten einer Betätigungseinrichtung (33) zum Verstellen eines verstellbaren Teils eines Sonnendaches (13) nutzbar sind.

2. Schaltungsanordnung nach Anspruch 1, **dadurch gekennzeichnet**, daß dem Pulsbreitenmodulator (27) eine Endstufe (30) nachgeschaltet ist, die gleichfalls wahlweise zur Ansteuerung des Gleichspannungswandlers (19) oder der Sonnendach-Betätigungseinrichtung (33) nutzbar ist.

3. Schaltungsanordnung nach Anspruch 2, **gekennzeichnet durch** ein Strommeßglied (34) zum Anliefern eines Strommeßsignals an den Mikroprozessor (10) in Abhängigkeit von dem in der Endstufe (30) fließenden Strom bei Nutzung der Endstufe sowohl zur Ansteuerung des Gleichspannungswandlers (19) als auch der Sonnendach-Betätigungseinrichtung (33).

4. Schaltungsanordnung nach einem der vorhergehenden Ansprüche, **dadurch gekennzeichnet**, daß beim Einsatz des Pulsbreitenmodulators (27) zum Ansteuern der Endstufe (30) oder des Schalters (20) des Gleichspannungswandlers (19) an dem Mikroprozessor (10) ein Spannungsmeßsignal anliegt, das ein Maß für die Ausgangsspannung des Gleichspannungswandlers ist, und daß der Mikroprozessor so ausgelegt und/oder programmiert ist, daß er die Gleichspannungswandler-Ausgangsspannung durch Ändern des dem Pulsbreitenmodulator zugehenden Steuersignals zu maximieren sucht.

5. Schaltungsanordnung nach Anspruch 4, **dadurch gekennzeichnet**, daß zwischen den Ausgang des Gleichspannungsswandlers (19) und den das Spannungsmeßsignal aufnehmenden Eingang des Mikroprozessors (10) eine Filterstufe (39) zur Dämpfung oder Unterdrückung von dem Spannungsmeßsignal überlagerten Störsignalen geschaltet ist.

6. Schaltungsanordnung nach Anspruch 4**, dadurch gekennzeichnet**, daß die Endstufe (30) zur Minimierung von Durchlaßverlusten einer einen Teil des Gleichspannungswandlers (19) bildenden Diode (23) parallel geschaltet ist.

7. Schaltungsanordnung nach einem der vorhergehenden Ansprüche, **gekennzeichnet durch** einen Temperatursensor (40), der an den Mikroprozessor (10) ein Temperaturmeßsignal zum Beeinflussen des dem Pulsbreitenmodulator (27) zugehenden Steuersignals in Abhängigkeit von der Umgebungstemperatur anlegt.

8. Schaltungsanordnung nach einem der vorhergehenden Ansprüche, **dadurch gekennzeichnet**, daß die Sonnendach-Betätigungseinrichtung (33) als Vorwahlautomatik ausgelegt ist, die einen Sollwertgeber (43) für die Soll-Stellung des verstellbaren Sonnendach-Teils (12) und einen dem verstellbaren Sonnendach-Teil zugeordneten Antrieb (46) aufweist, der Teil eines Regelkreises ist, der die am Sollwertgeber eingestellte Soll-Stellung mit der Ist-Stellung des verstellbaren Sonnendach-Teils vergleicht und letzteres verstellt, bis die Regelabweichung zu Null geworden ist.

## Claims

1. A circuit arrangement for supplying power to a fan (18) and/or battery (17) by means of a solar generator (11) in a vehicle (14) and with, serving to adapt impedances between the solar generator and the fan or accumulator, a direct current voltage converter (19) comprising a switch (20) which is alternately opened and closed by a pulse-width-modulated actuating signal, characterised in that to generate the pulse width modulated actuating signal, a microprocessor (10), a frequency generator (26) and a pulse width modulator (27) which is subject to the output signal from the frequency generator and the control signal from the microprocessor, are provided and can, as a function of a change-over signal, be used optionally also as components of an actuating means (33) for changing the position of a movable part of a sun roof (13).

2. A circuit arrangement according to Claim 1, characterised in that downstream of the pulse width modulator (27) is an end stage (30) which can likewise be used optionally for actuating the direct current voltage converter (19) or the sun roof actuating means (33).

3. A circuit arrangement according to Claim 2, characterised by a current measuring unit (34) for delivering a current measurement signal to the microprocessor (10) as a function of the current flowing in the end stage (30) when the end stage is being used both for operating the direct current voltage converter (19) and also the sun roof actuating means (33).

4. A circuit arrangement according to one of the preceding Claims, characterised in that when the pulse width modulator (27) is being used to actuate the end stage (30) or the switch (20) of the direct current voltage converter (19), there is applied to the microprocessor (10) a voltage measuring signal which is a measure of the output voltage from the direct current voltage converter and in that the microprocessor is so designed and/or programmed that it seeks to maximise the direct current voltage converter output voltage by modifying the control signal which passes to the pulse width modulator.

5. A circuit arrangement according to Claim 4, characterised in that a filter stage (39) for damping or suppressing interference signals superimposed on the voltage measuring signal is incorporated between the output from the direct current voltage converter (19) and the input of the microprocessor (10) which receives the voltage measuring signal.

6. A circuit arrangement according to Claim 4, characterised in that the end stage (30) is connected in parallel to minimise leakage losses of a diode (23) which forms a part of the direct current voltage converter (19).

7. A circuit arrangement according to one of the preceding Claims, characterised by a temperature sensor (40) which, depending upon the ambient temperature, applies a temperature measurement signal to the microprocessor (10) to influence the control signal which passes to the pulse width modulator (27).

8. A circuit arrangement according to one of the preceding Claims, characterised in that the sun roof actuating means (33) is designed as an automatic preselection unit which comprises a desired value transmitter (43) for the desired setting of the movable sun roof part (12) and, associated with the movable sun roof part a drive (46) which is part of a control circuit which compares the actual position of the movable sun roof part with the desired position to which the desired value transmitter has been set and moves the movable sun roof part until the control deviation has been reduced to zero.

## Revendications

1. Circuit d'alimentation en courant d'un ventilateur (16) ou d'un accumulateur (17) au moyen d'un générateur solaire (11) dans une voiture (14), comprenant un convertisseur de tension continue (19) servant à adapter l'impédance entre le générateur solaire et le ventilateur ou l'accumulateur et qui comporte un contacteur (20) s'ouvrant et se fermant alternativement sous l'action d'un signal de commande à impulsions modulées en largeur,
caractérisé en ce qu'
il est prévu, pour produire le signal à impulsions modulées en largeur, un microprocesseur (10), un générateur de fréquences (26) et un modulateur (27) à impulsions larges actionné par le signal de sortie du générateur de fréquences et par un signal de commande du microprocesseur, ces équipements pouvant en fonction d'un signal de commutation, être utilisés à volonté également comme composants d'un dispositif de manoeuvre (33) pour régler la position d'une partie mobile d'un toit solaire (13).

2. Circuit d'alimentation selon la revendication 1,
caractérisé en ce que
le modulateur (27) est suivi d'un étage final (30) qui peut également être utilisé à volonté pour commander le convertisseur (19) à tension continue ou le dispositif de manoeuvre (33) de toit solaire.

3. Circuit d'alimentation selon la revendication 2,
caractérisé en ce qu'
il comporte un organe de mesure de courant (34) servant à délivrer au microprocesseur (10) un signal de mesure fonction du courant circulant dans l'étage final (30) lorsque celui-ci est utilisé, ainsi qu'à commander le convertisseur (19) et aussi le dispositif (33) de manoeuvre de toit solaire.

4. Circuit d'alimentation selon une des revendications précédentes,
caractérisé en ce que
lorsqu'on utilise le modulateur (27) pour commander l'étage final (30) ou le contacteur (20) du convertisseur (19), le microprocesseur (10) reçoit un signal constituant une mesure de la tension de sortie du convertisseur, ce microprocesseur étant conçu et/ou programmé de manière à ce qu'il s'efforce de maximaliser cette tension de sortie en modifiant le signal de commande allant au modulateur.

5. Circuit d'alimentation selon la revendication 4,
caractérisé en ce que
un étage filtrant (39) est branché entre la sortie du convertisseur (19) et l'entrée du microprocesseur (10) recevant le signal de mesure de tension, afin d'amortir ou de supprimer les signaux parasites se superposant au signal de mesure de tension.

6. Circuit d'alimentation selon la revendication 4,
caractérisé en ce que
pour minimiser les pertes de transmissions, l'étage final (30) est monté en parallèle avec une diode (23) constituant une partie du convertisseur (19).

7. Circuit d'alimentation selon une des revendications précédentes,
caractérisé en ce qu'
il comporte un détecteur de température (40) qui délivre au microprocesseur (10) un signal de mesure de température, afin d'influencer, en fonction de la température ambiante, le signal de commande adressé au modulateur (27) à impulsions larges.

8. Circuit d'alimentation selon une des revendications précédentes,
caractérisé en ce que
le dispositif (33) de manoeuvre du toit solaire est du type automatique à présélection, comportant un indicateur (43) de la position imposée à la partie mobile (12) du toit solaire ainsi qu'un entraîneur (46) associé à cette partie (12) et constituant un élément d'un circuit de réglage qui compare la position de consigne dans l'indicateur (43) à la position réelle de la partie mobile (12) de toit et déplace celui-ci jusqu'à annulation de l'écart de réglage.
